# FASCICULE DE BREVET EUROPEEN

(11) **EP 4 139 540 B1**
(45) Date de publication et mention de la délivrance du brevet: **07.02.2024**
(21) Numéro de dépôt: 21732961.4
(22) Date de dépôt: 12.05.2021
(51) Int. Cl.: E04F 13/00

(54) **PROCÉDÉ ET DISPOSITIF DE FIXATION D'UN ÉCRAN MÉTALLIQUE MAILLÉ À UN BÂTIMENT**
VERFAHREN UND VORRICHTUNG ZUR BEFESTIGUNG EINES METALLGITTERS AN EINEM GEBÄUDE
METHOD AND DEVICE FOR FIXING A METAL MESH SCREEN TO A BUILDING

(30) Priorité: 13.05.2020 FR 2004726
(43) Date de publication de la demande: 01.03.2023
(73) Titulaire: Comptoir des Mailles et de l'Architecture, 13640 La Roque-d'Anthéron (FR)
(72) Inventeur: RODET, Nicolas, 13640 La Roque d'Anthéron (FR)
(74) Mandataire: Marchand, André
(86) Numéro de dépôt international: PCT/FR2021/050831
(87) Numéro de publication internationale: WO 2021/229187

(56) Documents cités:
- WO-A1-2017/046721
- DE-A1-102014 016 999
- FR-A- 1 428 959
- US-A- 2 931 436
- US-A1- 2014 069 052

## Description

La présente invention est relative aux systèmes de fixation d'un écran métallique maillé à un bâtiment.

L'invention s'applique notamment à un système de fixation d'un écran métallique de protection solaire à une façade d'un bâtiment.

Le brevet EP1809831 décrit un panneau muni d'une toile métallique destiné à être monté à l'extérieur d'un bâtiment pour occulter des baies vitrées tout en laissant passer de la lumière. Le panneau comporte une toile métallique constituée d'éléments de trame formés par des tringles et d'éléments de chaîne formés par deux câbles passant au dessus et en dessous des éléments de trame. Le panneau comporte deux plaques auxquelles est collée la toile et dont une comporte des pions prenant appui sur l'autre plaque. Le panneau peut être suspendu au bâtiment par des éléments de suspension fixés à l'une des plaques.

De telles structures de protection solaire, qui s'étendent souvent le long d'un plan, à distance d'une façade d'un bâtiment, peuvent présenter une surface importante, par exemple plusieurs dizaines ou centaines de mètre carré. Ces structures peuvent être soumises à des efforts importants résultant des effets du vent sur la structure, malgré le caractère ajouré d'une structure maillée. Il peut en résulter une déformation plastique ou une destruction de la structure.

Le document US20140069052A1 décrit un brise-soleil formé par une structure supportant un entrelacement de feuilles de métal. Les extrémités des feuilles sont munies de plaques de renforcement auxquelles est fixé un crochet. Le crochet est fixé à un goujon qui est ancré au mur d'un bâtiment. Le goujon est entouré d'un ressort qui fournit une tension aux feuilles de métal en serrant un écrou vissé sur le goujon. Ce document divulgue un procédé et un dispositif selon les préambules des revendications annexées 1 et 7 respectivement.

Le document DE102014016999A1 décrit un film architectural serré entre deux profilés de serrage. Des surfaces sont serrées de manière élastique au moyen d'un ressort de compression ou d'un ressort de traction par l'intermédiaire de rails de maintien fixes et espacés en forme de L. Les ressorts servent à précontraindre la surface afin qu'elle ne vibre pas trop à chaque petit coup de vent.

Le document WO 2017/046721 décrit un système de couverture comprenant au moins une feuille de couverture, une structure d'installation et de support. La structure d'installation et de support comprenant des moyens élastiques pour supporter et tendre la feuille dans au moins une direction de tension. Les moyens élastiques ont au moins une paire de ressorts de torsion pour supporter et mettre en tension la feuille, chaque ressort de torsion a un corps central en forme de spirale duquel s'étend une première branche, destinée à être placée en butée sur une surface de support du système, et une seconde branche, ayant une extrémité en forme de crochet pour le ressort de torsion.

Un objectif de l'invention est de proposer un procédé et un dispositif de fixation à un bâtiment d'une structure métallique maillée, qui soient améliorés et/ou qui remédient, en partie au moins, aux lacunes ou inconvénients des systèmes connus de fixation de telles structures.

En particulier, un objectif de l'invention est de proposer un procédé et un dispositif de fixation à un bâtiment d'un écran de protection solaire à maille métallique, qui permettent de régler facilement et avec précision l'intensité de la tension exercée sur l'écran de protection solaire à maille métallique.

Cet objectif est atteint par la prévision d'un procédé de fixation à un bâtiment d'un écran de protection solaire à maille métallique, comprenant les étapes consistant à : relier l'écran au bâtiment par au moins un élément de traction relié à au moins un bord de l'écran, tendre l'écran en exerçant une traction sur l'élément de traction, la traction exercée sur l'élément de traction étant fournie par un ressort de compression déformable élastiquement qui est sollicité en compression, selon un axe de traction sur l'élément de traction, par un élément de mise en tension de l'écran, le procédé comprenant une étape d'évaluation de l'intensité de la traction exercée sur l'élément de traction au moyen d'un dispositif d'évaluation comprenant un masque opaque et un indicateur visuel mobile qui est intégré ou lié au ressort et est mobile en translation par rapport au masque opaque en fonction de la compression du ressort.

Selon un mode de réalisation, l'indicateur visuel mobile comporte un témoin ou une pièce colorée.

Selon un mode de réalisation, le ressort s'appuie sur l'indicateur visuel mobile.

Selon un mode de réalisation, on contrôle les intensités de la traction exercée sur l'élément de traction, à distance de l'écran, par un contrôle visuel de l'indicateur visuel mobile.

Selon un mode de réalisation, le procédé comprend les étapes consistant à relier l'écran au bâtiment par une pluralité d'éléments de traction espacés le long d'au moins un bord de l'écran, tendre l'écran en exerçant une traction sur chacun des éléments de traction, exercer une traction sur chaque l'élément de traction conformément au procédé de l'invention, et évaluer les intensités des tractions exercées sur chaque élément de traction conformément au procédé de l'invention.

Selon un mode de réalisation, les éléments de traction sont disposés régulièrement espacés le long d'un bord de l'écran, et l'on exerce sur les éléments de traction des tractions dont les intensités sont sensiblement identiques.

La présente invention concerne également un dispositif de fixation à un bâtiment d'un écran à maille métallique, comprenant au moins un élément de traction à disposer le long d'au moins un bord de l'écran, pour relier l'écran au bâtiment, un élément de mise en tension de l'écran servant à exercer une traction sur l'élément de traction, et un ressort de compression déformable élastiquement qui est sollicité en compression par l'élément de mise en tension de l'écran, pour exercer une traction sur l'élément de traction, le dispositif comprenant un dispositif d'évaluation de l'intensité de la traction exercée sur l'élément de traction comportant un masque opaque et un indicateur visuel mobile qui est intégré ou lié au ressort et est mobile en translation par rapport au masque opaque en fonction de la compression du ressort.

Selon un mode de réalisation, l'indicateur visuel mobile comporte un témoin ou pièce colorée.

Selon un mode de réalisation, le ressort s'appuie sur l'indicateur visuel mobile.

Selon un mode de réalisation, l'indicateur visuel mobile et le masque opaque entourent ou enveloppent le ressort.

Selon un mode de réalisation, l'élément de traction traverse le masque opaque et l'indicateur visuel mobile.

Selon un mode de réalisation, l'élément de traction comporte une tige filetée et l'élément de mise en tension comprend un écrou qui est vissé sur la tige filetée.

Selon un mode de réalisation, la raideur du ressort est située dans une plage allant de dix mille newton par mètre environ jusqu'à cent mille newton par mètre environ.

La présente invention concerne également un procédé de construction d'un bâtiment doté d'un écran de protection solaire à maille métallique dans lequel on fixe l'écran au bâtiment par un procédé conforme à l'invention ou en utilisant un dispositif conforme à l'invention.

Ces aspects, caractéristiques, et avantages ainsi que d'autres de la présente invention seront mieux compris à la lecture de la description suivante de modes de réalisation du procédé et de dispositifs selon l'invention, faite à titre non limitatif en référence aux dessins annexés parmi lesquels :
- la figure 1 illustre schématiquement, par une vue de côté, un écran à maille métallique fixé à une façade d'un bâtiment selon un mode de réalisation du procédé de l'invention,
- la figure 2 illustre schématiquement, par une vue de côté, l'écran de la figure 1 dont la tension a été correctement effectuée,
- la figure 3 illustre, par une vue en perspective, un élément d'un dispositif de fixation illustré sur les figures 1 et 2,
- la figure 4 illustre schématiquement, par une vue de côté avec arrachement, un module de fixation d'un écran à un bâtiment selon un autre mode de réalisation du procédé de l'invention, et
- la figure 5 illustre schématiquement, par une vue en perspective, le module de fixation illustré figure 4.

Sauf indication explicite ou implicite contraire, des éléments ou organes - structurellement ou fonctionnellement - identiques ou similaires sont désignés par des repères identiques sur les différentes figures.

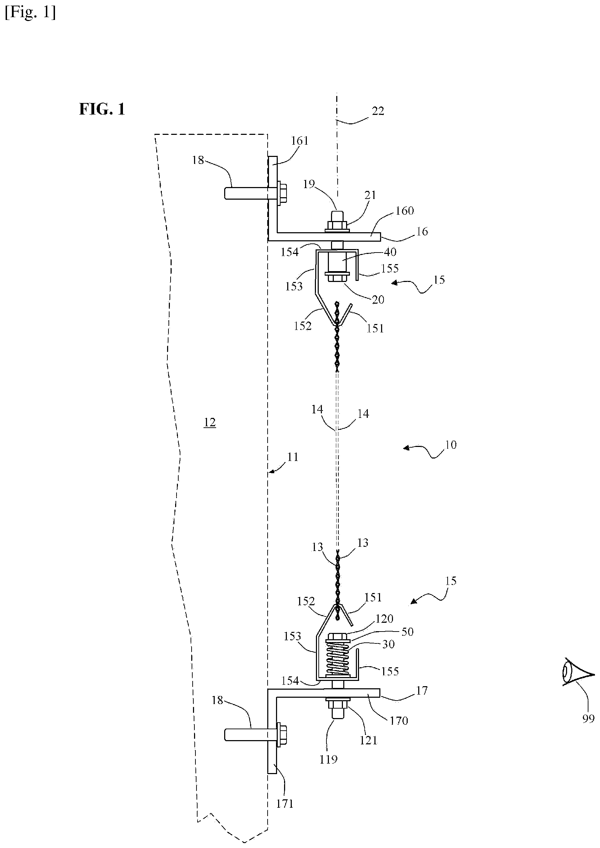

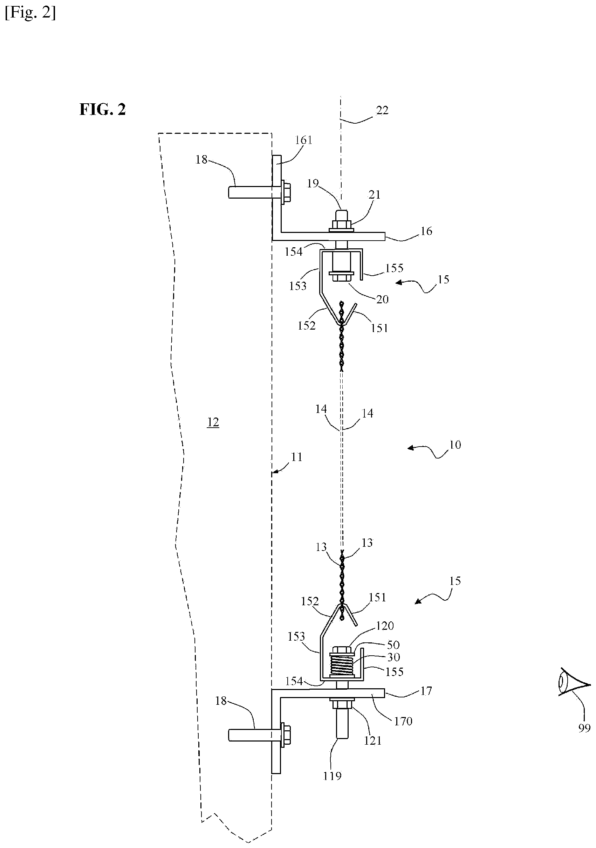

Par référence aux figures 1 et 2 notamment, un écran 10 est fixé à la façade 11 d'un bâtiment 12, à distance de - et sensiblement parallèlement à - la façade 11.

L'écran peut par exemple être constitué d'une toile réalisée à partir de câbles ou fils d'acier inoxydable, en particulier à partir de fils ou câbles 13 de trame s'étendant horizontalement, qui sont perpendiculaires au plan des figures 1 et 2, et de fils ou câbles 14 de chaîne s'étendant verticalement, parallèlement au plan des figures 1 et 2.

L'écran 10 est fixé au bâtiment 12 par l'intermédiaire de deux cornières 16, 17 de fixation qui présentent une section en forme d'équerre, dont une aile respective 161, 171 est en appui sur la façade 11, chaque aile 161, 171 étant percée d'orifices traversés par des vis 18 de fixation scellées dans la paroi de façade du bâtiment.

La seconde aile 160 de la cornière supérieure 16 soutient l'écran 10 par l'intermédiaire d'une barre supérieure 15 d'accrochage, cette barre 15 étant suspendue à la cornière 16 par un dispositif de suspension incluant un boulon comportant une vis 19, 20 et un écrou 21.

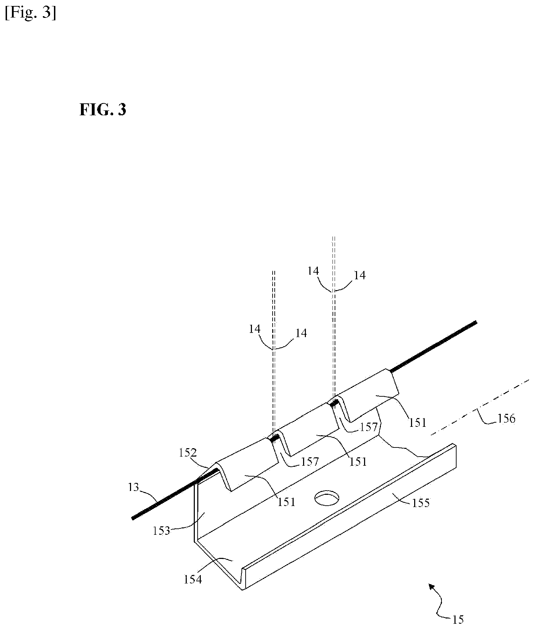

Par référence aux figures 1 à 3, la barre 15 présente une forme de profilé d'axe longitudinal 156 et comporte cinq ailes 151 à 155 sensiblement planes qui s'étendent respectivement le long de cinq plans parallèles à l'axe 156, et sont mutuellement inclinées deux à deux. La barre 15 peut par exemple être obtenue en réalisant quatre opérations de pliage dans une bande de tôle, les quatre plis étant parallèles à l'axe 156.

Des coupes ou encoches 157 sont prévues dans l'aile 151, régulièrement espacées le long de l'axe 156, de sorte que chaque portion d'aile 151 s'étendant entre deux encoches 157 adjacentes forme (avec l'aile 152) un crochet servant à accrocher l'écran 10 à la barre 15.

A cet effet, un élément (fil ou câble) de trame 13 de l'écran est engagé dans l'angle formé par les deux ailes adjacentes 151, 152, tandis que les éléments (fil ou câble) de chaîne 14 de l'écran traversent les encoches 157.

Les trois autres ailes planes 153 à 155 de la barre 15 forment un profilé en forme de U.

La tige filetée 19 de la vis 19, 20 s'étend au travers d'un orifice percé dans l'aile 160 de la cornière 16 supérieure, ainsi qu'au travers d'un orifice percé dans l'aile 154 de la barre supérieure 15 d'accrochage, selon un axe vertical 22.

L'écrou 21 du boulon 19 à 21 de suspension de l'écran s'appuie sur la face supérieure de l'aile 160 de la cornière 16, par l'intermédiaire d'une rondelle.

Le bord supérieur de l'écran 10 est ainsi suspendu à la barre 15 qui est suspendue à la cornière 16.

De façon identique ou similaire, le bord inférieur de l'écran 10 est accroché à une barre inférieure 15 d'accrochage qui est fixée à la cornière inférieure 17 par un dispositif de fixation et de mise en tension incluant un boulon comportant une vis (ou tirant) 119, 120 et un écrou 121.

A cet effet, la tige filetée 119 de la vis 119, 120 s'étend au travers d'un orifice percé dans l'aile 170 de la cornière 17, ainsi qu'au travers d'un orifice percé dans l'aile 154 de la barre inférieure 15, sensiblement selon l'axe vertical 22.

Plusieurs vis 119, 120 de traction (mise en tension) sont prévues, qui sont disposées régulièrement espacées le long de la barre inférieure 15 d'accrochage (et le long du bord inférieur de l'écran 10).

De la même façon, en particulier avec un pas d'espacement identique, plusieurs vis 19, 20 de suspension sont prévues, qui sont disposées régulièrement espacées le long de la barre supérieure 15 d'accrochage (et le long du bord supérieur de l'écran 10).

Un écrou 21, 121 est respectivement vissé à chaque vis 19, 20, 119, 120 (pour former autant de boulons).

Un ressort 30 hélicoïdal est prévu autour de la tige 119 et s'étend entre la tête 120 de la vis 119, 120 et l'aile 154 de la barre inférieure 15.

Chaque écrou 121 de mise en tension de l'écran sert à exercer une traction vers le bas, selon l'axe 22, sur la vis 119, 120 de traction.

Pour augmenter la tension dans l'écran, on visse l'écrou 121 qui est en appui (par l'intermédiaire d'une rondelle) sous l'aile 170 de la cornière 17, sur la tige filetée 119 de la vis 119, 120, de façon à rapprocher la tête 120 (de la vis) vers l'aile 154 de la barre 15 inférieure, en comprimant le ressort 30.

Le serrage de l'écrou 121 provoque la déformation élastique du ressort 30, faisant passer le dispositif de fixation du bord inférieur de l'écran de la configuration illustrée en partie basse de la figure 1, à la configuration illustrée en partie basse de la figure 2.

Dans la configuration illustrée figure 1, le ressort 30 est peu - ou pas - comprimé, de sorte qu'une partie supérieure du ressort 30, la tête 120 du tirant 119, 120, et le cas échéant une rondelle 50 interposée entre cette tête 120 et le ressort 30, s'étendent au dessus du bord supérieur de l'aile 155 de la barre 15 d'accrochage inférieure et au dessous du bord inférieur de l'aile 151 de cette barre 15.

Par conséquent, dans cette configuration, la partie supérieure du ressort 30, la tête 120, et le cas échéant la rondelle 50 sont visibles par un observateur 99 observant la fixation au bâtiment de la partie inférieure de l'écran 10 et placé à distance de l'écran 10, par exemple à quelques mètre ou dizaines de mètre de l'écran.

A contrario, dans la configuration illustrée figure 2, le ressort 30 est suffisamment comprimé pour que le ressort 30, la tête 120 du tirant 119, 120, et la rondelle 50 s'étendent au dessous du bord supérieur de l'aile 155 de la barre 15.

Par conséquent, dans cette configuration, le ressort 30, la tête 120, et la rondelle 50 ne sont pas visibles par un observateur 99 observant la fixation au bâtiment de la partie inférieure de l'écran 10 et placé à distance de l'écran 10, étant masqués/cachés par l'aile 155 (qui est opaque).

L'observateur peut ainsi évaluer visuellement que la traction sur l'écran opérée par les tirants 119, 120 est correcte lorsque le ressort 30, la tête 120 de tirant et la rondelle 50 d'appui sont masqués par la partie 155 de la barre inférieure 15.

La longueur libre du ressort 30, la raideur de ce ressort, l'épaisseur de la rondelle 50 et celle de la tête 120, ainsi que la hauteur du masque formé par l'aile 155 de la barre 15 sont choisis de sorte que l'aile 155 masque le ressort, la rondelle et la tête lorsque la hauteur du ressort comprimé correspond à une traction dans le tirant 119, 120 qui provoque la mise en tension adéquate de l'écran.

La tension adéquate de l'écran peut être déterminée (calculée) en fonction notamment des caractéristiques mécaniques de la maille métallique formant l'écran et de l'évaluation des efforts exercés par le vent sur l'écran. Ces efforts peuvent être déterminés conformément à la norme NF EN 1991-1-4 par exemple.

Par exemple, la tension moyenne (répartie) adéquate de l'écran peut être de l'ordre de mille à deux mille Newton par mètre de longueur du bord inférieur de l'écran.

La raideur du ressort 30 peut être choisie dans une plage allant de dix mille newton par mètre (N/m) environ jusqu'à cent mille newton par mètre (N/m) environ, par exemple.

Dans ce mode de réalisation, le masque 155 forme, avec la tête 120 et le cas échéant le ressort 30 et/ou la rondelle 50, un dispositif d'évaluation - ou indicateur - visuel(le) de l'intensité de la traction exercée sur l'écran 10 par le tirant 119, 120.

Pour faciliter l'évaluation visuelle de l'intensité de la traction exercée, la partie supérieure du ressort 30, la tête 120 et/ou la rondelle 50 qui est/sont mobile(s) en translation par rapport au masque 155, selon l'axe 22 de traction sur l'élément 119, 120 de traction, peu(ven)t être colorée(es), en particulier d'une couleur contrastant visuellement avec celle du masque 155.

L'indicateur visuel peut ainsi être intégré ou lié à l'organe 30 mécanique déformable (i.e. le ressort), l'indicateur visuel pouvant être essentiellement constitué par la rondelle 50 colorée sur laquelle s'appuient l'organe 30 mécanique déformable et l'élément 119, 120 de mise en tension.

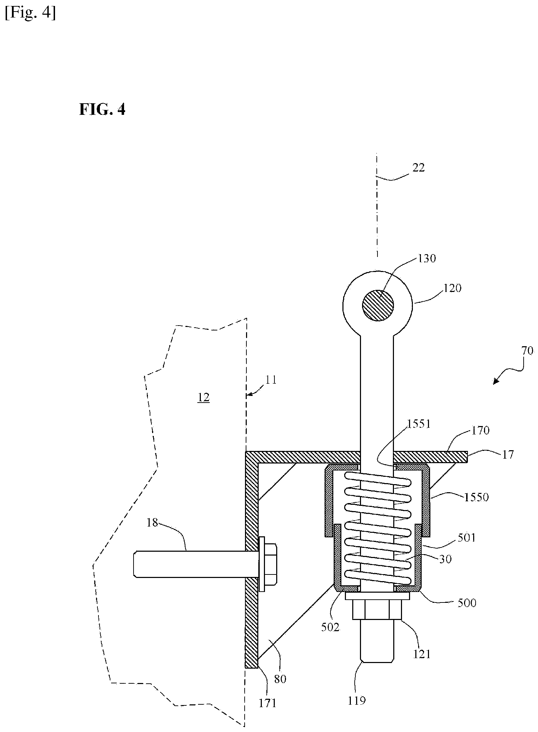

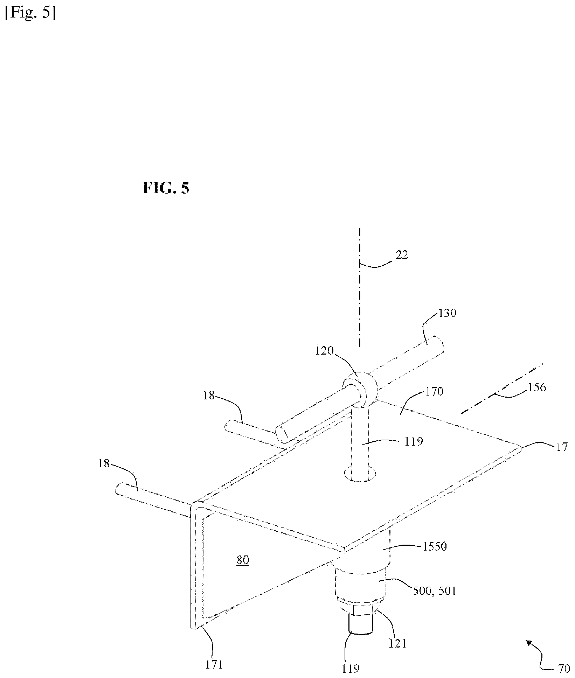

Le dispositif de fixation et de traction du bord inférieur de l'écran illustré figures 4 et 5 comporte un module 70 de fixation, plusieurs modules 70 identiques étant scellés au bâtiment sous le bord inférieur de l'écran, les modules 70 pouvant être régulièrement espacés le long du bord inférieur de l'écran.

Chaque module 70 comporte un tronçon 17 de cornière fixé au bâtiment 12 par deux vis 18 et renforcé par deux goussets 80 latéraux plans de forme trapézoïdale.

L'élément 119, 120 de traction est ici constitué d'une vis à oeil dont la tête 120 est en forme de disque épais percé d'un orifice central de section circulaire au travers duquel s'étend un élément (tige ou câble) 130 de trame (horizontal) prévu le long du bord inférieur de l'écran à fixer au bâtiment.

Le dispositif d'évaluation de l'intensité de la traction exercée sur l'écran par l'élément 119, 120 de traction lorsque l'écrou 121 de mise en tension est vissé sur la tige 119, comporte un témoin/indicateur visuel (coloré) 500 monté coulissant à l'intérieur d'un masque 1550 selon l'axe 22 longitudinal de la tige 119 ; l'indicateur 500 s'enfonce dans le masque 1550 et se rapproche de l'aile horizontale 170 de la cornière 17 lorsque l'écrou 121 est vissé sur la tige 119.

L'indicateur visuel mobile 500 comporte une paroi 502 de base en forme de disque et percée d'un orifice traversé par la tige 119, la paroi 502 étant insérée/pincée entre l'écrou 121 et le ressort 30, et l'indicateur 500 comporte une paroi 501 d'enveloppe en forme de bague annulaire, qui s'étend selon l'axe 22, à partir de la paroi 502, et qui entoure une partie inférieure du ressort 30.

De façon similaire, le masque 1550 comporte une paroi 1551 de fond en forme de disque et percée d'un orifice traversé par la tige 119, cette paroi de fond étant insérée/pincée entre l'aile horizontale 170 de la cornière 17 et le ressort 30 ; le masque 1550 comporte également une paroi d'enveloppe en forme de bague annulaire, qui s'étend selon l'axe 22, à partir de la paroi 1551, et qui entoure une partie supérieure du ressort 30 ainsi que la paroi 501 de l'indicateur 500.

L'indicateur 500 et le masque 1550 forment une sorte boîtier cylindrique en deux parties entourant/enveloppant le ressort 30.

Comme dans le mode de réalisation des figures 1 et 2, la longueur du ressort 30, la raideur de ce ressort, la hauteur de l'indicateur coloré 500 (mesurée selon l'axe 22), ainsi que la hauteur de la paroi d'enveloppe du masque 1550 peuvent être choisis de sorte que le masque 1550 cache l'indicateur coloré 500 lorsque la hauteur du ressort comprimé correspond à une traction (exercée par le tirant 119, 120) qui provoque la mise en tension adéquate de l'écran.

Dans la configuration illustrée figures 4 et 5, la traction exercée par l'écrou 121 sur le tirant 119, 120 est inférieure à celle assurant une tension adéquate de l'écran, et une partie de l'indicateur 500 saillant sous le masque 1550 est visible par un observateur qui peut ainsi évaluer que cette traction est insuffisante.

Dans les modes de réalisation décrits ci avant, l'organe mécanique du dispositif de contrôle de la tension de l'écran est un ressort hélicoïdal 30 qui est soumis à l'effort de traction exercé par l'élément 121 de mise en tension sur l'élément 119, 120 de traction. Le ressort 30 est sollicité en compression lors de la mise en tension, s'étend autour d'une partie de la tige 119 de traction et est en appui sur la tête 120 de traction ou sur l'écrou 121 de mise en tension.

Le ressort 30 contribuant à permettre d'évaluer visuellement l'intensité de la traction exercée par le tirant 119, 120 sur l'écran, peut être tout type de ressort de compression dont l'amplitude de la déformation varie en fonction de l'intensité de la traction exercée.

Le dispositif de fixation peut comporter plusieurs éléments de traction et autant d'éléments d'évaluation des tractions exercées, qui sont disposés le long de plusieurs bords de l'écran, en particulier le long du bord inférieur de l'écran comme décrit ci avant ainsi que le long du bord supérieur de l'écran comme illustré figures 1 et 2.

Par référence aux figures 1 et 2, la mise en tension de l'écran le long de son bord supérieur peut également s'obtenir en vissant l'écrou 21 sur la tige 19 de la vis 19, 20, de façon à rapprocher la tête 20 de la vis de l'aile horizontale 160 de la cornière 16.

Dans un mode réalisation, le dispositif d'évaluation de l'intensité de la traction exercée sur la tige 19 par le ressort peut additionnellement comporter un capteur 40 d'effort délivrant un signal qui varie en fonction de l'intensité de la traction exercée sur la tige 19. A cet effet, le capteur 40 s'étend autour d'une portion de la tige 19, est pincé entre la tête 20 de la vis de traction et l'aile 154 de la barre supérieure 15 d'accrochage, et est sollicité en compression lors du serrage de l'écrou 21 sur la tige 19. Un signal électrique délivré par le capteur 40 peut être converti en un signal lumineux ou un signal radio transmettant, à distance de l'écran, une information caractéristique de l'intensité de la traction exercée sur la tige 19 par l'écrou 21. Le capteur 40 peut être par exemple un capteur piézo-électrique ou un capteur à jauge(s) de contrainte, et peut par exemple être alimenté par des cellules photovoltaïques intégrées ou reliées à l'écran ou au dispositif de fixation de l'écran.

## Revendications

1. Procédé de fixation à un bâtiment (12) d'un écran (10) de protection solaire à maille métallique (13, 14), comprenant les étapes consistant à :
- relier l'écran au bâtiment par au moins un élément de traction (19, 20, 21, 119, 120, 121) relié à au moins un bord de l'écran,
- tendre l'écran en exerçant une traction sur l'élément de traction, la traction exercée sur l'élément de traction (19, 20, 21, 119, 120, 121) étant fournie par un ressort de compression (30) déformable élastiquement qui est sollicité en compression, selon un axe (22) de traction sur l'élément de traction, par un élément (21, 121) de mise en tension de l'écran,
procédé **caractérisé en ce qu'**il comprend une étape d'évaluation de l'intensité de la traction exercée sur l'élément de traction au moyen d'un dispositif (50, 120, 155, 500, 501, 1550) d'évaluation comprenant un masque opaque (155, 1550) et un indicateur visuel mobile (50, 120, 500, 501) qui est intégré ou lié au ressort (30) et est mobile en translation par rapport au masque opaque (155, 1550) en fonction de la compression du ressort (30).

2. Procédé selon la revendication 1, dans lequel l'indicateur visuel mobile comporte un témoin ou une pièce colorée (50, 120, 500, 501).

3. Procédé selon l'une des revendications 1 et 2, dans lequel le ressort (30) s'appuie sur l'indicateur visuel mobile (50, 120, 500, 501).

4. Procédé selon l'une des revendications 1 à 3, dans lequel on contrôle les intensités de la traction exercée sur l'élément de traction (19, 20, 21, 119, 120, 121), à distance de l'écran, par un contrôle visuel de l'indicateur visuel mobile.

5. Procédé selon l'une des revendications 1 à 4, comprenant les étapes consistant à :
- relier l'écran au bâtiment par une pluralité d'éléments de traction (19, 20, 21, 119, 120, 121) espacés le long d'au moins un bord de l'écran,
- tendre l'écran en exerçant une traction sur chacun des éléments de traction,
- exercer une traction sur chaque élément de traction conformément à la revendication 1, et
- évaluer les intensités des tractions exercées sur chaque élément de traction conformément à la revendication 1.

6. Procédé selon la revendication 5, dans lequel les éléments (19, 20, 21, 119, 120, 121) de traction sont disposés régulièrement espacés le long d'un bord de l'écran, et l'on exerce sur les éléments de traction des tractions dont les intensités sont sensiblement identiques.

7. Dispositif de fixation à un bâtiment (12) d'un écran (10) à maille (13, 14) métallique, comprenant :
- au moins un élément (19, 20, 21, 119, 120, 121) de traction à disposer le long d'au moins un bord de l'écran, pour relier l'écran au bâtiment,
- un élément (20, 121) de mise en tension de l'écran servant à exercer une traction sur l'élément de traction (19, 20, 21, 119, 120, 121), et
- un ressort de compression (30) déformable élastiquement qui est sollicité en compression par l'élément (21, 121) de mise en tension de l'écran, pour exercer une traction sur l'élément de traction,
dispositif **caractérisé en ce qu'**il comprend un dispositif (50, 120, 155, 500, 501, 1550) d'évaluation de l'intensité de la traction exercée sur l'élément de traction comportant un masque opaque (155, 1550) et un indicateur visuel mobile (50, 120, 500, 501) qui est intégré ou lié au ressort (30) et est mobile en translation par rapport au masque opaque (155, 1550) en fonction de la compression du ressort.

8. Dispositif selon la revendication 7, dans lequel l'indicateur visuel mobile (50, 120, 500, 501) comporte un témoin ou pièce colorée (50, 120, 500, 501).

9. Dispositif selon l'une des revendications 7 et 8, dans lequel le ressort (30) s'appuie sur l'indicateur visuel mobile (50, 120, 500, 501).

10. Dispositif selon l'une quelconque des revendications 7 à 9, dans lequel l'indicateur visuel mobile (500) et le masque opaque (1550) entourent ou enveloppent le ressort (30).

11. Dispositif selon l'une quelconque des revendications 7 à 10, dans lequel l'élément de traction (19, 20, 21, 119, 120, 121) traverse le masque opaque (1550) et l'indicateur visuel mobile (50, 500).

12. Dispositif selon l'une quelconque des revendications 7 à 11, dans lequel l'élément de traction (19, 20, 21, 119, 120, 121) comporte une tige filetée (19, 119) et l'élément de mise en tension comprend un écrou (21, 121) qui est vissé sur la tige filetée (119).

13. Dispositif selon l'une quelconque des revendications 7 à 12, dans lequel la raideur du ressort (30) est située dans une plage allant de dix mille newton par mètre (N/m) environ jusqu'à cent mille newton par mètre (N/m) environ.

14. Procédé de construction d'un bâtiment doté d'un écran de protection solaire à maille métallique dans lequel on fixe l'écran au bâtiment par un procédé conforme à l'une quelconque des revendications 1 à 6 ou en utilisant un dispositif conforme à l'une quelconque des revendications 7 à 13.

## Patentansprüche

1. Verfahren zum Befestigen einer Sonnenschutzabschirmung (10) mit Metallgitter (13, 14) an einem Gebäude (12,), umfassend die Schritte, bestehend aus:
- Verbinden der Abschirmung mit dem Gebäude durch mindestens ein Zugelement (19, 20, 21, 119, 120, 121), das mit mindestens einem Rand der Abschirmung verbunden ist,
- Spannen der Abschirmung, indem eine Zugkraft auf das Zugelement ausgeübt wird, wobei die Zugkraft, die auf das Zugelement (19, 20, 21, 119, 120, 121) ausgeübt wird, durch eine elastisch verformbare Druckfeder (30) bereitgestellt wird, die entlang einer Zugachse (22) auf dem Zugelement durch ein gespanntes Element (21, 121) der Abschirmung mit Druck belastet wird,
wobei das Verfahren **dadurch gekennzeichnet ist, dass** es einen Schritt zum Beurteilen der Stärke der Zugkraft, die auf das Zugelement ausgeübt wird, mittels einer Beurteilungsvorrichtung (50, 120, 155, 500, 501, 1550) umfasst, umfassend eine lichtundurchlässige Maske (155, 1550) und einen bewegbaren visuellen Indikator (50, 120, 500, 501), der in die Feder (30) integriert oder an sie gebunden ist und relativ zu der lichtundurchlässigen Maske (155, 1550) in Abhängigkeit von der Druckfeder (30) translatorisch bewegbar ist.

2. Verfahren nach Anspruch 1, wobei der bewegbare visuelle Indikator einen Anzeiger oder ein farbiges Stück (50, 120, 500, 501) aufweist.

3. Verfahren nach einem der Ansprüche 1 und 2, wobei sich die Feder (30) auf den bewegbaren visuellen Indikator (50, 120, 500, 501) stützt.

4. Verfahren nach einem der Ansprüche 1 bis 3, wobei die Stärken der Zugkraft, die auf das Zugelement (19, 20, 21, 119, 120, 121) ausgeübt wird, in einer Distanz von der Abschirmung, durch eine visuelle Steuerung des bewegbaren visuellen Indikators gesteuert werden.

5. Verfahren nach einem der Ansprüche 1 bis 4, umfassend die Schritte, bestehend aus:
- Verbinden der Abschirmung mit dem Gebäude durch eine Vielzahl von Zugelementen (19, 20, 21, 119, 120, 121), die entlang mindestens eines Rands der Abschirmung beabstandet sind,
- Spannen der Abschirmung, indem eine Zugkraft auf jedes der Zugelemente ausgeübt wird,
- Ausüben einer Zugkraft auf jedes Zugelement gemäß Anspruch 1, und
- Beurteilen der Stärken der Zugkräfte, die auf jedes Zugelement gemäß Anspruch 1 ausgeübt werden.

6. Verfahren nach Anspruch 5, wobei die Zugelemente (19, 20, 21, 119, 120, 121) entlang eines Rands der Abschirmung regelmäßig beabstandet sind und auf die Zugelemente Zugkräfte ausgeübt werden, deren Stärken im Wesentlichen identisch sind.

7. Verfahren zum Befestigen einer Abschirmung (10) mit Gitter (13, 14) aus Metall an einem Gebäude (12), umfassend:
- mindestens ein Zugelement (19, 20, 21, 119, 120, 121), das entlang mindestens eines Rands der Abschirmung anzuordnen ist, zum Verbinden der Abschirmung mit dem Gebäude, - ein Spannelement (20, 121) der Abschirmung, das dazu dient, eine Zugkraft auf das Zugelement (19, 20, 21, 119, 120, 121) auszuüben, und
- eine elastisch verformbare Druckfeder (30), die durch das Spannelement (21, 121) der Abschirmung mit Druck belastet wird, zum Ausüben einer Zugkraft auf das Zugelement,
wobei die Vorrichtung **dadurch gekennzeichnet ist, dass** sie eine Vorrichtung (50, 120, 155, 500, 501, 1550) zum Beurteilen der Stärke der Zugkraft umfasst, die auf das Zugelement ausgeübt wird, die eine lichtundurchlässige Maske (155, 1550) und einen bewegbaren visuellen Indikator (50, 120, 500, 501) aufweist, der in die Feder (30) integriert oder an sie gebunden ist und relativ zu der lichtundurchlässigen Maske (155, 1550) in Abhängigkeit von der Druckfeder translatorisch bewegbar ist.

8. Vorrichtung nach Anspruch 7, wobei der bewegbare visuelle Indikator (50, 120, 500, 501) einen Anzeiger oder ein farbiges Stück (50, 120, 500, 501) aufweist.

9. Vorrichtung nach einem der Ansprüche 7 und 8, wobei sich die Feder (30) auf den bewegbaren visuellen Indikator (50, 120, 500, 501) stützt.

10. Vorrichtung nach einem der Ansprüche 7 bis 9, wobei der bewegbare visuelle Indikator (500) und die lichtundurchlässige Maske (1550) die Feder (30) umgeben oder umhüllen.

11. Vorrichtung nach einem der Ansprüche 7 bis 10, wobei das Zugelement (19, 20, 21, 119, 120, 121) die lichtundurchlässige Maske (1550) und den bewegbaren visuellen Indikator (50, 500) durchquert.

12. Vorrichtung nach einem der Ansprüche 7 bis 11, wobei das Zugelement (19, 20, 21, 119, 120, 121) eine Gewindestange (19, 119) aufweist und das gespannte Element eine Mutter (21, 121) umfasst, die auf die Gewindestange (119) geschraubt ist.

13. Verfahren nach einem der Ansprüche 7 bis 12, wobei die Steifigkeit der Feder (30) in einem Bereich von ungefähr zehntausend Newton pro Meter (N/m) bis ungefähr hunderttausend Newton pro Meter (N/m) liegt.

14. Verfahren zum Bauen eines Gebäudes, das mit einer Sonnenschutzabschirmung mit Metallgitter versehen ist, wobei die Abschirmung durch ein Verfahren gemäß einem der Ansprüche 1 bis 6 oder unter Verwendung einer Vorrichtung gemäß einem der Ansprüche 7 bis 13 an dem Gebäude befestigt wird.

## Claims

1. A method for attaching a metal mesh (13, 14) sunshield screen (10) to a building (12), comprising the steps of:
connecting the screen to the building by at least one traction element (19, 20, 21, 119, 120, 121) connected to at least one edge of the screen,
tensioning the screen by exerting a traction on the traction element, the traction on the traction element (19, 20, 21, 119, 120, 121) being provided by an elastically deformable compression spring (30) which is compression loaded, along a traction axis (22) on the traction element, by a screen tensioning element (21, 121),
wherein the method comprises a step of evaluating the intensity of the traction exerted on the traction element by means of an evaluation device (50, 120, 155, 500, 501, 1550) comprising an opaque mask (155, 1550) and a movable visual indicator (50, 120, 500, 501) which is integral with or linked to the spring (30) and is movable relative to the opaque mask (155, 1550) as a function of the compression of the spring (30).

2. The method of claim 1, wherein the movable visual indicator comprises a witness or colored part (50, 120, 500, 501).

3. The method of any of claims 1 and 2, wherein the spring (30) rests on the movable visual indicator (50, 120, 500, 501).

4. The method according to any one of claims 1 to 3, wherein the intensities of the traction on the traction element (19, 20, 21, 119, 120, 121) are monitored remotely from the screen by visual control of the movable visual indicator.

5. The method of any of claims 1 to 4, comprising the steps of:
- connecting the screen to the building by a plurality of traction elements (19, 20, 21, 119, 120, 121) spaced along at least one edge of the screen,
- tensioning the screen by exerting traction on each of the traction elements,
- exerting traction on each traction element according to claim 1, and
- evaluating the intensities of the traction exerted on each traction element according to claim 1.

6. The method of claim 5, wherein the traction elements (19, 20, 21, 119, 120, 121) are arranged evenly spaced along an edge of the screen, and the traction elements are acted upon with substantially equal traction intensities.

7. A device for attaching a metal mesh (13, 14) screen (10) to a building (12), comprising:
- at least one traction element (19, 20, 21, 119, 120, 121) configured to be arranged along at least one edge of the screen, to connect the screen to the building,
- a screen tensioning element (20, 121) for exerting traction on the traction element (19, 20, 21, 119, 120, 121), and
- an elastically deformable compression spring (30) which is compression loaded by the screen tensioning element (21, 121) to exert a traction on the traction element,
- wherein the device comprises a device (50, 120, 155, 500, 501, 1550) for evaluating the intensity of the traction exerted on the traction element, including an opaque mask (155, 1550) and a movable visual indicator (50, 120, 500, 501) that is integral with or linked to the spring (30) and is movable with respect to the opaque mask (155, 1550) as a function of the compression of the spring.

8. The device of claim 7, wherein the movable visual indicator (50, 120, 500, 501) comprises a witness or colored indicator (50, 120, 500, 501).

9. The device of any of claims 7 and 8, wherein the spring (30) rests on the movable visual indicator (50, 120, 500, 501).

10. The device of any one of claims 7 to 9, wherein the movable visual indicator (500) and the opaque mask (1550) surround or envelop the spring (30).

11. The device according to any one of claims 7 to 10, wherein the traction element (19, 20, 21, 119, 120, 121) passes through the opaque mask (1550) and the moving visual indicator (50, 500).

12. The device according to any one of claims 7 to 11, wherein the traction element (19, 20, 21, 119, 120, 121) comprises a threaded stem (19, 119) and the tensioning element comprises a nut (21, 121) that is screwed onto the threaded stem (119).

13. The device of any one of claims 7 to 12, wherein the stiffness of the spring (30) is in a range from about ten thousand newtons per meter (N/m) up to about one hundred thousand newtons per meter (N/m).

14. A method of constructing a building provided with a metal mesh sunscreen wherein the screen is attached to the building by a method according to any of claims 1 to 6 or using a device according to any of claims 7 to 13.
